# EUROPEAN PATENT SPECIFICATION

(11) **EP 2 033 882 B1**
(45) Date of publication and mention of the grant of the patent: **23.09.2009**
(21) Application number: 07380363.7
(22) Date of filing: 14.12.2007
(51) Int. Cl.: B62J 6/16, B62K 23/06

(54) **Multifunction control for motorcycle**
Multifunktionssteuerung für Motorräder
Contrôle multifonction pour motocyclette

(30) Priority: 07.09.2007 ES 200701854 U
(43) Date of publication of application: 11.03.2009
(73) Proprietor: Matallana Munguía, Fernando, 34005 Palencia (ES)
(72) Inventor: Matallana Munguía, Fernando, 34005 Palencia (ES)

(56) References cited:
- EP-A- 1 584 551
- EP-A- 1 816 065
- WO-A-20/05092698
- DE-U1-202006 006 797

## Description

The present invention relates to the field of motorcycle or similar vehicles handle controls, in particular to those assembled in the handlebar next to the grips and which allows the user to manage the more usual control functionalities, and more particularly still to a control system based on a set of push button and a rotary wheel located in the handlebar lever, that is characterised by providing an easily and intuitively managing of multiple functionalities due to the innovative placement and organization of the controls.

At present time most of the motorcycles dispose of multiple connectors, switches and push buttons to manage and adjust the different vehicle functionalities. Most of the current devices are suitable either for adjust parameters with the motorcycle stopped (like the suspension system regulation) or due to their simplicity and relevance are assembled in the handlebar to manage with the thumb.
However, because of the fact that the motorcycle industry innovates continually, every time increases the number of control parameters the user disposes of, like for example the windscreen levelling the heated handgrips or the dynamic lighting regulation among others.
The multiple least variables available to manage by the motorcycle driver prompt the typical control devices to be redesigned. So managing an important number of buttons and pushes could be avoided.
To that end the Spanish application U200601622 and the international patent WO 2005/092698 describe alternatives ways of arranging a multifunction control system in a motorcycle's handlebar. Whereas the application U200601622 shows a multifunction switch which enables the control of multiple functionalities through a revolving bolster placed in its top, the patent WO 2005/092698 comprises an actuation ring in the handle area in such a way that it is adjustable in several degrees of freedom. Within the sector of electronic handlebar controls for bicycle also are know arrangements that besides include an electrical switch mounted to the control brake lever, such an arrangement is depicted in the European Patents EP 1 584 551 A and EP 1 816 065 A. In this kind of bicycle controls while the thumb grabs the handlebar the driver can act over the switch with another finger.

The object of the present invention is to propose a new organization of the usual handlebar controls for motorcycle, so that this new system allows an easy and intuitive managing of the several parameters to be controlled by the driver. Furthermore solves the inconveniences above mentioned and provides additional advantages.

The system of the invention is based on three main devices: the rotary wheel placed in the lever, the push button positioned near the grip and an indicator (or a set of these) placed in the motorcycle dashboard.

The wheel is a rotary position transducer which axle is within the lever. This rotary wheel is positioned in the horizontal plane of the lever and is placed from de grip edge at the same level as the natural position of the forefinger when it is stretched out. So the driver can modify by means of the wheel turning, in each step of this wheel, the magnitude rank for the selected parameter to adjust.

The rotary wheel, besides the turning over its axle, must give out enough resistance against movement along the perpendicular direction of its turning axle, in such a way that higher pressures than the usual ones to change the rank of the selected function can be detected. So in case the driver presses the rotary wheel as he grabs the lever, the possible changes in the control function (due to the wheel turning) are not taken into account.

The selection of the control function to be modified through the working of the rotary wheel above mentioned is performed by the action of a push button placed next to the grip. This push button is easily activated stretching out the thumb, and by means of this the driver is able to choose among all available functions, the one he wishes to manage in every moment.

Additionally, the driver must know the available functions to modify through this system, and the function selected each time. For this reason the motorcycle dashboard has an indicator (or a set of these) showing the different functionalities as well as the active one at every moment.

With these features is obtained an innovative system that permits managing different functionalities for a motorcycle, which contributes two important advantages regarding the traditional control systems:

First, allows gathering a great number of different functions or parameters to control, from the usual ones to another variables not often managed, but useful. Nowadays those functionalities may be not used because of the high quantities of buttons and switches required.

The second great advantage of the invention here described refers to the simple and intuitive handling of the control functions which also allows a safer driving since the user takes advantage of the controls placement. Mainly remarkable is the placement of the position transducer rotary wheel due to its situation as part of the handlebar lever, and placed in such a way that make use of the habitual motorcycle drivers posture, that usually leans the forefinger on the lever as an anticipation position.

The invention here described changes the use of the previous devices (which control on most of the parameters depends on the thumb), by the functions adjusted through the forefinger, allowing an easier and safer driving. It is proved, that a usual position of the motorcycle drivers is to lean the forefinger on the handlebar lever, beacuse this allows the user to drive more relaxed and comfortable, minimizing the reaction time and therefore making possible a safer driving

The present invention is further described hereinafter with reference to one of its preferred embodiments shown in the accompanying drawings, in which:

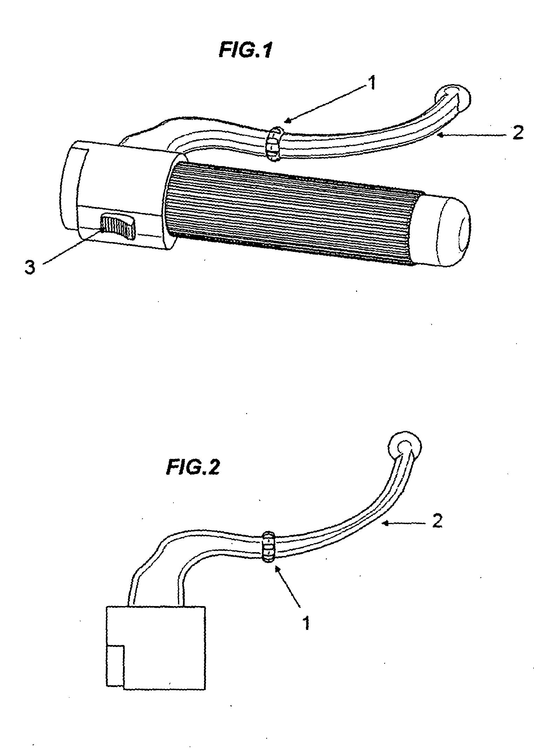

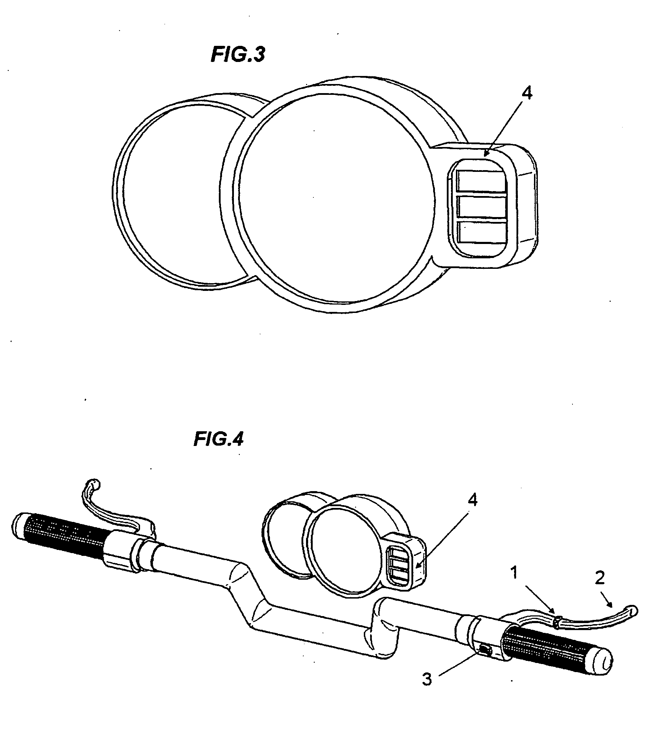

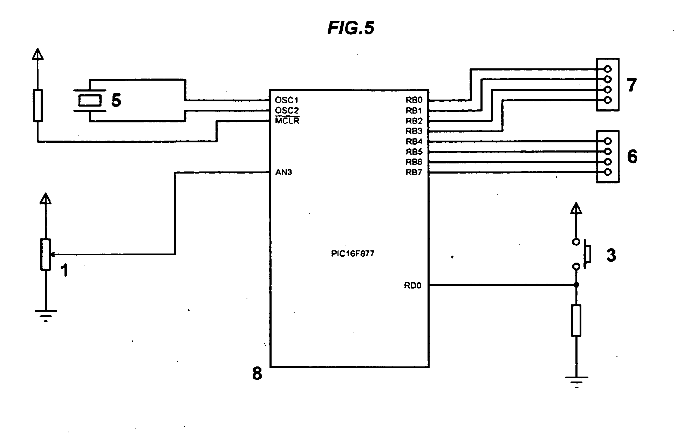

Figure 1 is a perspective, schematic and partial view of a motorcycle right handlebar assembled by the grip, the break lever with the position transducer rotary wheel, and the push button for selecting the control function to manage; figure 2 is a plant view of the rotary wheel placement in the lever; figure 3 is a perspective view of the dashboard with the control function indicators; figure 4 is a perspective view of the handlebar and dashboard; and figure 5 represents a realization of a simple electronic circuit based on microcontroller to detect the position of the transducer rotary wheel, and process this information to generate the suitable control signals.

As can be seen from the above figures, the multifunction control for motorcycle comprises a position transducer multi-turn rotary wheel (1) made of a hard material either plastic or metallic, which turns over its centre axle and has a rough surface to make easier its turning with the forefinger, considering that usually the user wears gloves to drive. The rotary wheel is placed in the lever (2) at a distance from the grip edge that can be activated easily by means of the natural forefinger stretching out.

Next to the grip is allocated a conventional push button (3), activated through the thumb, so that with every pulsation the driver selects the control function to manage by means of the rotary wheel turning.

On the other hand the motorcycle dashboard has a set of lighting indicators (4) to show the available functions to be controlled by the system, as well as showing the activate function.

In a realization not here described, the indicator of the dashboard may be represented either by any kind of lighting indicator or electronic display that achieve the same function. Besides the rotary wheel and push button set could be assembled either on the left side of the handlebar or the right.

The circuit arrangement of figure 5 contains a basic microcontroller, eight bits MCU (8), with useful features to make easier generating the control signals of the different parameters to manage. Like an analog to digital conversor that allows the sampling of the rotary wheel position (1), and PWM modules which can be used to regulate the supply voltage of motors and servos. The oscillator (5) sets the microcontroller operation frequency. The pushing over the switch button (3) is detected, and enables to change the control function to be modified by the driver. The multi-turn potentiometer (3) represents the rotary wheel placed in the lever (2). Connector 6 contains the output signals of the different functions and parameters to manage, and connector 7 comprises the corresponding output signal to the dashboard, so the lighting indicators are activated according to the selected function.

Naturally the construction details and the embodiments can be varied widely respect to what is described and illustrated purely by way of example herein, without thereby departing from the scope of the present invention as defined in the appended claims.

## Claims

1. A multifunction control system for a motorcycle or similar vehicle, wherein the system comprises an electronic control unit and a set of switches and button actuators, arranged in the handlebar grip and control lever (2), for managing the available functionalities,
**characterised by** a position transducer multi-turn rotary wheel (1) placed in the handlebar lever (2), which can revolve around the central axle of said lever, placed at a distance from the handlebar grip in such a way that allows, by means of the forefinger stretching out, to adjust a parameter to manage.

2. Multifunction control system for motorcycle or similar vehicle according to claim 1 where pressure over the rotary wheel (1) can be detected.

3. Multifunction control system for motorcycle or similar vehicle according to claim 1, comprising a push button (3) controlled by the thumb, and placed next to the handlebar grip for selecting the parameter to manage.

4. Multifunction control system for motorcycle or similar vehicle according to claim 1, which the dashboard includes either any kind of lighting indicator or display (4) to show the user the available function to be controlled by means of the system, as well as showing the selected parameter to be controlled.

## Patentansprüche

1. Ein multifunktionelles Regelsystem für Krafträder oder ähnliche Fahrzeuge, bestehend aus einem Steuergerät und einer Anordnung aus Schaltern und Tastern, die zur Verwaltung der verfügbaren Funktionen auf dem Lenkergriff und dem Bedienhebel (2) angebracht sind,
**gekennzeichnet durch** einen Positionsgeber in Form eines Endlosdrehrads (1), das im Bedienhebel (2) auf dem Lenkergriff integriert ist und um die Zentralachse des Hebels gedreht werden kann. Die Entfernung zwischen Lenkergriff und Drehrad ermöglicht das Einstellen von Parametern mit dem ausgestreckten Zeigefinger.

2. Multifunktionelles Regelsystem für Krafträder oder ähnliche Fahrzeuge gemäß Anspruch 1, das eine Druckbetätigung des Drchrads (1) erkennt.

3. Multifunktionelles Regelsystem für Krafträder oder ähnliche Fahrzeuge gemäß Anspruch 1, bestehend aus einem mit dem Daumen zu bedienenden Taster (3), der sich neben dem Lenkergriff befindet und mit dem Parameter ausgewählt werden können.

4. Multifunktionelles Regelsystem für Krafträder oder ähnliche Fahrzeuge gemäß Anspruch 1, dessen Bestandteil eine im Armaturenbrett integrierte Leuchtanzeige oder ein Display (4) ist, dem der Benutzer die über das System zu steuernden, verfügbaren Funktionen entnehmen kann und das zugleich den ausgewählten, einstellbaren Parameter anzeigt.

## Revendications

1. Un système de commande multifonctions pour motocycle on tout véhicule similaire, où le système comprend un bloc de commande électronique et un ensemble d'actionneurs de commutateurs et de boutons, disposés sur la poignée du guidon et le levier
**Caractérisé par** un capteur rotatif multitours transducteur de position (1) placé sur le levier du guidon (2), qui peut tourner autour de l'axe central dudit levier, placé près de la poignée du guidon de manière à être accessible avec un index tendu, pour le réglage des paramètres.

2. Un système de commande multifonctions pour motocycles ou tout véhicule similaire, tel que défini au point 1 et permettant la détection de la pression du capteur rotatif (1)

3. Un système de commande multifonctions pour motocycle ou tout véhicule similaire, tel que défni au point 1, comportant un bouton-poussoir (3) actionné avec le pouce et placé à côté de la poignée permettant de sélectionné le réglage voulu.

4. Un système de commande multifonctions pour motocycle ou tout véhicule similaire, tel que défini au point 1, avec un tableau de bord comportant un voyant lumineux ou un affichage LCD (4) permettant à l'utilisateur de visualiser toutes les fonctions q'il peut gérer à l'aide du système, ainsi que les paramètres à contrôler.
